# EUROPEAN PATENT SPECIFICATION

(11) **EP 4 512 501 B1**
(45) Date of publication and mention of the grant of the patent: **22.07.2026**
(21) Application number: 22954047.1
(22) Date of filing: 05.08.2022
(51) Int. Cl.: C02F 1/40, C02F 11/18, B01D 17/032, B01D 17/02, B01D 17/04, B01D 17/12, B01D 17/00, C02F 103/32, C02F 101/32

(54) **OIL COMPONENT AND SLUDGE COMPONENT COLLECTION TANK**
ÖLKOMPONENTE UND SCHLAMMKOMPONENTENSAMMELTANK
RÉSERVOIR DE COLLECTE DE COMPOSANT D'HUILE ET DE COMPOSANT DE BOUE

(43) Date of publication of application: 26.02.2025
(73) Proprietor: TBM Co., Ltd., Tokorozawa-shi Saitama, 359-1164 (JP)
(72) Inventor: SAHARA, Kunihiro, Kodaira-shi Tokyo 187-0003 (JP)
(74) Representative: Cabinet Chaillot
(86) International application number: PCT/JP2022/030066
(87) International publication number: WO 2024/029059

(56) References cited:
- WO-A1-2022/084818
- WO-A2-2020/148695
- CN-A- 105 413 243
- CN-A- 105 413 243
- JP-A- 2007 236 818
- JP-B2- S5 246 734
- JP-U- S5 346 074
- JP-Y2- S5 141 657
- JP-Y2- S5 537 204

## Description

### Field of the Invention

This invention relates to an oil and sludge collecting tank placed on-site at a food factory or the like that discharges oil-containing wastewater.

### Background Art

Manufacturing wastewater from food factories and other sources contains various water pollutants (oil). If such wastewater is drained without any treatment, oil and other substances in the wastewater will stick onto drain pipes and be solidified. This causes the drain pipes to become clogged. As a result, purifying water in combined treatment tanks and purifying water at sewage treatment plants become difficult. In addition, it may cause a negative impact on the environment, become subject to legal restrictions, and become unable to continue their business operations. Therefore, various methods and devices have been proposed for treating wastewater containing solids such as oil, sediment, and floating substances on a business facility basis.

One way is a method or a device for physically removing oil and other substances from wastewater. In this way, oil-containing wastewater is pooled into a large tank such as an oil/water separation tank, raw water tank, or adjustment tank. And then, a large amount of floating oil in the upper layer of the tank is periodically pumped out, adsorbed with an adsorbent and filtered.

In addition, in response to the recent social trend toward environmental issues, an apparatus that efficiently transfers and removes oil and precipitated waste from oil-containing wastewater for purification has been disclosed, wherein the apparatus is an efficient and economical treatment technology that can be adopted by the above-mentioned small-scale businesses that discharge oil-containing wastewater (for example, see Patent Document 1). Furthermore, an oil separation/management device that comprises a control device having an oil sensor and a data transmitting/receiving means and efficiently recovers oil from oil-containing wastewater has also been disclosed (for example, referring to Patent Literature 2). JP S53 46074 U and CN 105 413 243 A disclose an oil and sludge collecting tank according to prior art. WO 2022/084818 A1 discloses a FOG (Fats, Oil, or Grease) separator apparatus. WO 2020/148695 A2 discloses a Fats, Oil, or Grease collection.

### Citation List

### Patent Document

[Patent document 1] Japanese Unexamined Patent Application Publication No. 2006-7092
[Patent document 2] Publication of Japanese Utility Model Registration No.3216173

### BRIEF SUMMARY OF THE INVENTION

### Problems that Invention is to Solve

However, with the method and device described above, which pool wastewater in a large tank and periodically pump it out for treatment, the wastewater (pool) tends to emit bad odors, and oil separation and removal tend to be incomplete. In addition, large-scale systems and equipment are required. This results in pretty high costs.

In addition, the oil collected from large tanks is treated as industrial waste, so businesses that produce waste oil have responsibility for its disposal. As a result, these businesses still face problems such as large waste amounts of industrial waste, associated high processing costs, and limited effectiveness in reducing wastewater loads.

Furthermore, in a method in which the oil that has surfaced in an oil/water separation tank is pumped up, and the oil is stored and floated in a large collecting tank (sometimes the temperature is kept warm at around 50°C to prevent the floating oil from being solidified), the function of the collecting tank is simply to concentrate the oils floating in the oil/water separation tank.

Recently the problem of Global warming has become more and more serious. The emission of greenhouse gas such as carbon dioxide gas and methane gas has been reduced. At the same time, renewable energy made from recycled waste is getting more attention. Waste oil, which can be biomass resources, wasted from food factories and so on, weigh more than 300,000 tons in a year in Japan. If it is expanded to a global scale, the amount will be extremely huge. Recently, a biomass generation system using a diesel generator has been developed in order to produce original biomass fuels from waste oil, which used only to be wasted as industrial sludge. With this biomass generation system, CO2 reduction, recycling, and water purification can be achieved. In other words, there is an urgent need to establish a technology for efficiently collecting recyclable oil from waste oil discharged from food factories, and the like.

The present invention has been made in view of the above-mentioned problems and has an objective to provide an oil and sludge collecting tank, which is placed on-site at a food factory or the like that discharges oil-containing wastewater, and which can collect oil and sludge more efficiently from the upper layer of the oil/water separation tank that pools the oil-containing wastewater. It has also an objective to provide an oil-collecting system utilizing this oil and sludge collecting tank.

### Means to Solve the Problems

In order to solve the abovementioned issues, the present invention is an oil and sludge collecting tank according to claim 1.

In this oil and sludge collecting tank, preferably, wherein the upper tank comprising: an inflow valve that controls an inflow amount of the upper layer pumped via the inflow pipe; a discharge valve that controls a discharge amount discharged to a return pipe, which returns a stored water of the upper tank to the oil/water separation tank, wherein a lid portion, into which a refining transfer device for suctioning and collecting the oil in the oil and sludge collecting tank can be inserted, is formed on an upper surface of the upper tank.

In this oil and sludge collecting tank, preferably, wherein the lower tank heating means, which is provided on a wall of the lower tank whose shape is cubic, is a silicon rubber heater in the form of a flat surface, and wherein a surface side of the silicon rubber heater is covered with a heat insulating material.

In this oil and sludge collecting tank, preferably, further comprising: a controller that closes the second discharge valve and start the lower tank heating means in a case when oil in the bottom side of the lower tank is detected by the lower tank oil detection sensor and stops the lower tank heating means in a case when the temperature detected by the lower tank temperature sensor reaches a predetermined temperature thereafter.

In this oil and sludge collecting tank, preferably, further comprising: an upper tank heating means that heats the upper tank; an upper tank temperature sensor that detects the temperature in the upper tank; an upper tank oil detection sensor that detects oil in the bottom side of the upper tank; an upper tank second oil detection sensor that detects oil at a predetermined height from the bottom of the upper tank; and an upper tank bottom heating section that heats the bottom of the upper tank, wherein the controller starts the upper tank bottom heating section in both cases when the lower tank oil detection sensor detects oil in the bottom side of the lower tank and when the upper tank oil detection sensor detects oil in the bottom side of the upper tank.

In this oil and sludge collecting tank, preferably, wherein the controller closes the inflow valve and the discharge valve and opens the second discharge valve in a case when oil is detected by the upper tank second oil detection sensor.

In this oil and sludge collecting tank, preferably, wherein the capacity ratio of the upper tank and the lower tank is in the range of 3:1 to 4:1.

Also disclosed herein is an oil-collecting system having a return pipe that returns from an oil sending pipe of sending an upper layer of an oil/water separation tank to the oil/water separation tank via the oil and sludge collecting tank according to claim 1, wherein the oil-collecting system conducts an oil collecting using a plurality of the oil and sludge collecting tanks from one oil/water separation tank, wherein the oil-collecting system comprises a flow path switching part that switches the route from the oil/water separation tank to the plurality of the oil and sludge collecting tanks according to the amount of floating oil in the oil and sludge collecting tank, and wherein the flow path switching part is installed in the oil sending pipe.

### Effects of the Invention

This invention comprises an oil and sludge collecting tank that temporarily stores an upper layer of an oil/water separation tank, and that collects oil and sludge, comprising: an upper tank into which the upper layer of the oil/water separation tank flows through an inflow pipe; at least one or more lower tank that has a smaller volume than the upper tank, and that is continuously provided from the bottom surface of the upper tank; and a lower tank heating means that heats the lower tank. With this configuration, the oil and sludge collecting tank of this invention can collect oil and sludge more efficiently from the oil/water separation tank that pools the oil-containing wastewater.

### Brief description of Drawings

FIG. 1(a) is a plane view of an oil and sludge collecting tank according to an embodiment of this invention.
FIG. 1(b) is a front view of the oil and sludge collecting tank.
FIG. 1(c) is a right side view of the oil and sludge collecting tank.
FIG. 2(a) is a functional explanation view of the oil and sludge collecting tank.
FIG. 2(b) is an E-line enlarged view of the oil and sludge collecting tank.
FIG. 3 is a functional block view of the oil and sludge collecting tank.
FIG. 4 is a pipe route view of an oil-collecting system comprising the oil and sludge collecting tank.
FIG. 5(a) and FIG. 5(b) are storage transition views of the oil and sludge collecting tank.
FIG. 6(a) and FIG. 6(b) are storage transition views of the oil and sludge collecting tank.
FIG. 7(a) and FIG. 7(b) are storage transition views of the oil and sludge collecting tank.
FIG. 8 is a flowchart showing procedure steps of the oil-collecting system.

### Description of Embodiments

### (Embodiment)

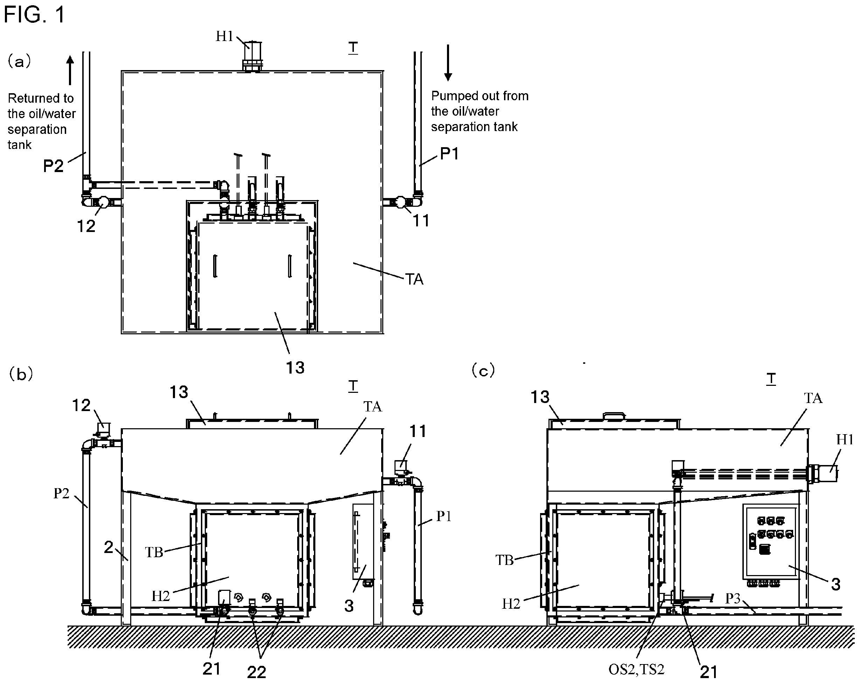

An oil and sludge collecting tank according to an embodiment of the present invention will be explained with reference to FIGS. 1 to 8. This oil and sludge collecting tank is a temporary storage tank for a large amount of the upper layer (this is called a floating oil and fat, or a floating oil) that is floating in the oil/water separation tank (raw water tank, adjustment tank), and that is pumped out therefrom. These tanks can pool manufacturing wastewater discharged from food factories, etc. In addition, this oil and sludge collecting tank efficiently collects oil and sludge from the pumped-out floating oil and fat to reuse energy, and is placed on-site at a food factory or the like that discharges manufacturing wastewater.

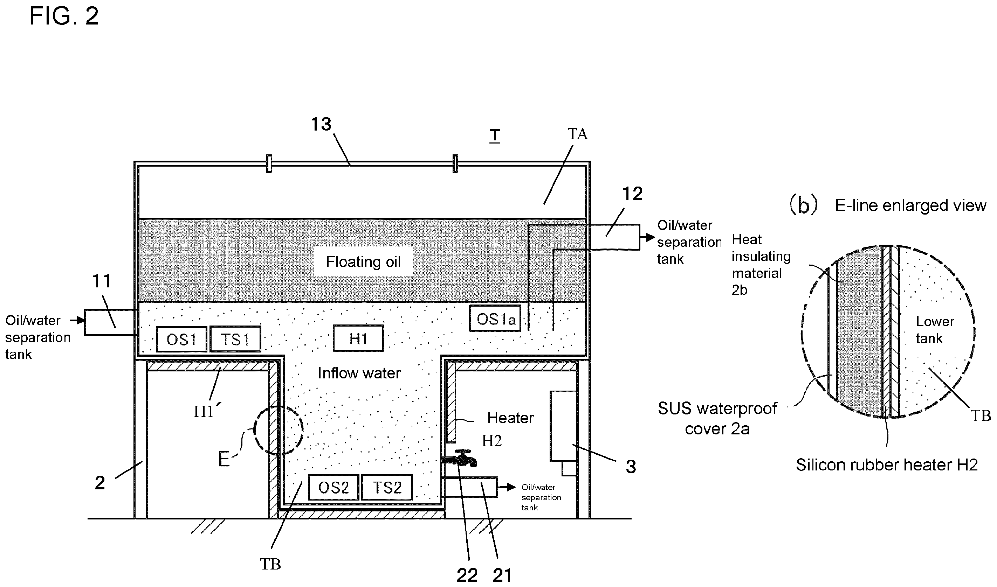

First, the overall structure of the oil and sludge collecting tank (hereinafter referred to as a collecting tank) according to the present embodiment will be described with reference to FIGS. 1 and 2. As shown in FIG. 1, the collecting tank T comprises an upper tank TA into which the floating oil (upper layer) of an oil/water separation tank that temporarily stores oil-containing wastewater flows through an inflow pipe P1, and at least one or more (in this embodiment, one) lower tank TB that has a smaller volume (or may have a shorter side or diameter in top view) than the upper tank TA, wherein the lower tank TB is continuously provided from the bottom surface of the upper tank TA. In this embodiment, as shown in FIG. 1(b), the lower tank TB is arranged at the center of one end of the bottom surface of the upper tank TA, and the collecting tank T has an approximately T-shape when viewed from the front. In addition, the collecting tank T comprises a column 2 (for example, 600 to 650 mm in height) extending vertically to support the upper tank TA in a hollow state, and the height of the column 2 is the same as the lower tank TB or higher than the lower tank TB. The lower tank TB is installed on the ground. Furthermore, the phrase "continuously provided" means that an opening is provided at the bottom of the upper tank TA, and this opening corresponds to the upper surface of the lower tank TB. The stored content of the upper tank TA directly flows into the lower tank TB.

The upper tank TA in this embodiment has a substantially rectangular parallelepiped shape with a width of 1400 mm, a height of 400 mm, and a depth of 1400 mm, with a gentle slope downward toward the lower tank TB, wherein the slope is provided on the bottom surface. The lower tank TB has a cubic shape (square prism shape) with a width of 600 mm, a height of 600 mm, and a depth of 600 mm. It is noted that the shapes of the upper tank TA and the lower tank TB are not limited to the shapes shown in this figure, and may be other shapes such as a cylindrical shape and so on, as long as it has the same function.

Therefore, in the case of this figure, the upper tank TA has a capacity of 784L, the lower tank TB has a capacity of 216L, and the upper tank 10+lower tank 20 has a capacity of 1000L. For example, when floating oil is stored up to a height of 150 mm in the upper tank TA, the upper tank TA has 294 L, the lower tank TB has 216 L, and the total stored oil is 510 L. Herein, the capacity ratio of the upper tank TA and the lower tank TB is preferably in the range of 3:1 to 4:1.

As shown in FIG. 1, the upper tank TA comprises an inflow valve 11 that controls the inflow amount of the upper layer (floating oil) pumped from the oil/water separation tank via the inflow pipe P1, and a discharge valve 12 that controls the discharge amount discharged to the return pipe P2, which returns the stored water (inflow water) of the upper tank 10 to the oil/water separation tank. Specifically, the inflow valve 11 and the discharge valve 12 are electrically operated valves, and the open/close states of the valves are controlled in response to command signals from a controller described below. Furthermore, a lid portion 13, into which a refining transfer device for suctioning and collecting the oil in the collecting tank T can be inserted, is formed on the upper surface of the upper tank TA. Although the shape of the lid portion 13 is square in this figure, it may be of other shapes, such as a circle.

The upper tank TA comprises an upper tank heating section H1 such as a plug heater, an upper tank temperature sensor TS1 that detects the temperature in the upper tank TA, an upper tank oil detection sensor OS1 that detects oil in the bottom side of the upper tank TA, an upper tank second oil detection sensor OS1a that detects oil at a predetermined height (approximately 10 to 15 cm height) from the bottom of the upper tank TA, and an upper tank bottom heating section H1' (silicon rubber heater) that heats the bottom. Here, the upper tank temperature sensor TS1 is a temperature sensor that measures the temperature of the content stored in the upper tank by utilizing, for example, the fact that the electrical resistance of a semiconductor or the like changes with temperature. The oil detection sensor OS1 is a sensor that detects the presence of oil at a predetermined position (for example, the bottom side) of the upper tank TA. For example, this sensor uses an optical fiber to detect output changes caused by propagating light, that is attached to oil, being scattered to the outside or by attenuating the propagating light that is absorbed by oil.

The lower tank TB comprises a second discharge valve (electric valve) 21 that controls the amount of discharge to a second return pipe P3 that returns the stored water (inflow water) in the lower tank TB to the oil/water separation tank, and a manual valve 22 for discharging the stored water (mainly adjusting the amount of stored water, collecting sludge, etc.) in the bottom side of the lower tank TB. In this embodiment, the manual valves 22 are two manual ball valves, for example, one for adjusting the amount of stored water and one for collecting sludge.

A lower tank heating section H2 for heating is provided on the wall of the lower tank TB. The lower tank heating section H2 is a silicon rubber heater (three-phase 200V) in the form of a flat surface, for example, a nickel alloy sandwiched between silicone rubber sheets, wherein the lower tank heating section H2 is provided on the wall of the cubic lower tank TB. In this figure, the lower tank heating section H2 is provided in a planar manner along five sides, which consist of the four side surfaces and the bottom surface of the lower tank TB.

As shown in FIG. 2(b), an SUS (stainless steel) waterproof cover 2a is provided on the surface side of the lower tank heating section H2 using packing and screws, and a heat insulating material 2b is installed inside. With this configuration, by enclosing the heat insulating material 2b, the temperature of the lower tank TB can be maintained in the range of about 65 to 70 degrees for a long time. As a result, efficient separation of oil, sludge, and water in the lower tank TB can be promoted. Herein, the examples of the heat insulating material 2b include a foam heat insulating material and a fiber heat insulating material. Other latent heat storage materials (PCM: Phase Change Material) may also be filled. In a case when using the latent heat storage material PCM, it is preferable to use a heat storage material whose phase changes mainly around 70°C. Due to this, the latent heat storage material exchanges heat with the stored contents that have flowed into the lower tank TB, and the lower tank TB can be maintained at around 70°C for a long time.

The lower tank TB further comprises a lower tank oil detection sensor OS2 that detects oil on the bottom side of the lower tank TB, and a lower tank temperature sensor TS2 that detects temperature changes in the lower tank TB.

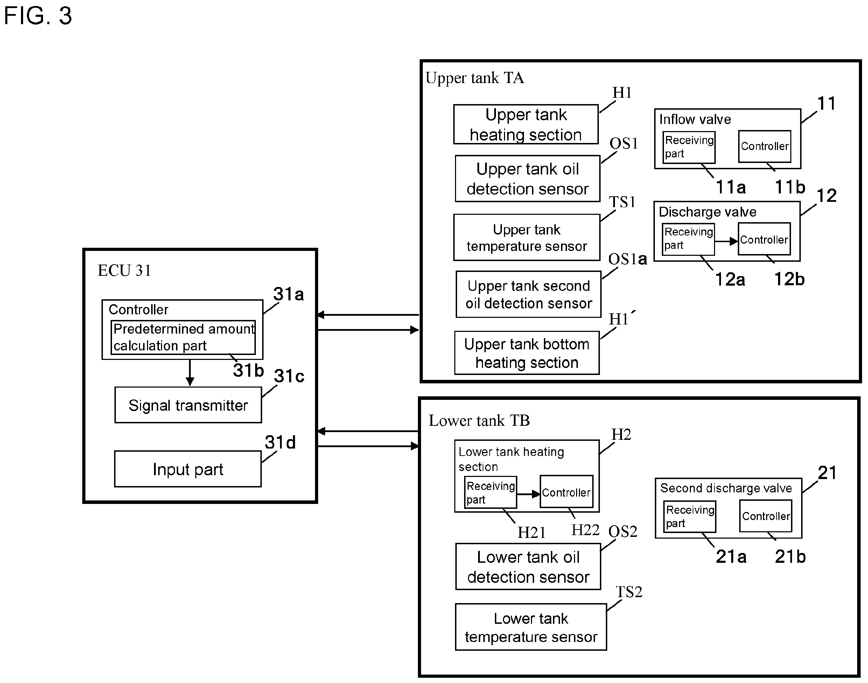

Next, the functions of the ECU (Electronic Control Unit) 31 in a control panel 3 provided in the collecting tank T, will be explained with reference to FIG. 3. Herein, the control panel 3 may be integrated with the collecting tank T or may be separate from the collecting tank T.

The ECU 31 controls the lower tank heating section 23 to start heating operation when the floating oil in the lower tank TB reaches the position of the lower tank oil detection sensor OS2 on the bottom side. Furthermore, the ECU 31 controls the heating operation of the lower tank heating section 23 to be stopped when the temperature detected by the lower tank temperature sensor TS2 reaches a predetermined temperature (65-70 degrees). This controls the lower tank heating section H2 to repeat on/off operation. Thereafter, the ECU 31 controls the second discharge valve 21 to open. With this configuration, only water from the floating oil and fat in the lower tank TB can be efficiently returned to the oil/water separation tank.

Specifically, as shown in the functional blocks of FIG. 3, the ECU 31 comprises a controller 31a, a predetermined amount calculation part 31b, a signal transmitter 31c, and an input part 31d. The controller 31a controls the reception of the oil detection signal from the lower tank oil detection sensor OS2 in order to heat the floating oil filled in the lower tank TB and efficiently separate it into oil, sludge, and water. When the controller 31a receives the oil detection signal, it transmits a control signal to the lower tank heating section H2 via the signal transmitter 31g in order to start the operation.

The predetermined amount calculation part 31b calculates a certain value base on various parameter information (the capacity of the upper tank TA, the capacity of the lower tank TB, the heating capacity of the lower tank heating section H2, the inflow amount from the inflow valve 11, the discharge amount from the discharge valve 12 and second discharge valve 21, temperature of TS1 and TS2, and oil detection of OS1 and OS2). The signal transmitter 31c transmits a heating operation on/off control signal to the upper tank heating section H1 and the lower tank heating section H2. The signal transmitter 31c also transmits a valve opening adjustment signal to the inflow valve 11, the discharge valve 12, and the second discharge valve 21.

The lower tank heating section H2 comprises a receiving part H21 and a controller H22, and the receiving part H21 receives a control signal transmitted from the signal transmitter 31c, and controls on/off of a heating operation based on the received control signal. The second discharge valve 21 comprises a receiving part 21a and a controller 21b, and the receiving part 21a receives a control signal transmitted from a signal transmitter 26c, and adjusts the valve opening degree based on the received control signal.

The input part 31d, which is provided in the control panel 3, is an operation setting device, a remote control, etc., and allows input of various parameter information necessary for calculation of a predetermined amount by the predetermined amount calculation part 31b, and input setting of a predetermined amount. Herein, the ECU 26 may be controlled to start the heating operation of the upper tank heating section H1 in a case when oil is detected by the upper tank oil detection sensor OS1. This makes it possible to efficiently separate the oil and water content of the floating oil in the upper tank TA.

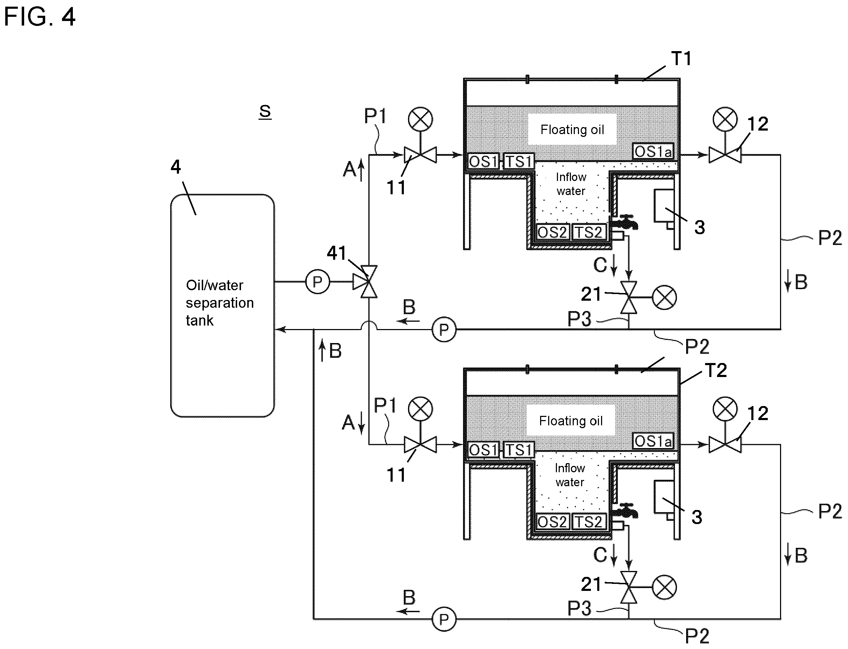

Next, the main routes of piping of the oil-collecting system using the collecting tank 1 according to the present embodiment will be explained with reference to FIG. 4. This oil-collecting system S comprises one oil/water separation tank 4 and a plurality of (here, two) collecting tanks T1, T2. In this figure, a case will be described when there are two collecting tanks T. However, the number of collecting tanks T can be adjusted depending on the amount of water discharged and the amount of floating oil accumulated in the oil/water separation tank 4 and the like. The oil/water separation tank 4 is also sometimes called a grease trap, oil trap, grease interceptor, etc., and its basic structure is generally a natural separation flotation method that utilizes the difference in specific gravity between water and oil.

As shown in FIG. 4, the piping of the oil-collecting system S comprises an oil supply pipe P1 for feeding the floating oil (upper layer) in the oil/water separation tank 4 to the upper tank TA of the collecting tanks T1, T2 (oil supply route (corresponding to arrow A)), a circulation pipe P2 (return route (corresponding to arrow B)) that returns the inflow water stored in the upper tank TA of the collecting tanks T1, T2 to the oil/water separation tank 4, and a second circulation pipe P3 (second return route (corresponding to arrow C)) connected to the circulation pipe P2 in a T-shape in order to return the inflow water stored in the lower tank TB of the collecting tanks T1, T2 to the oil/water separation tank 4. With the function of performing the circulation operation shown in this figure, the oil and sludge in the collecting tanks T1, T2 can be efficiently collected, and the inflow water can be circulated and returned to the oil/water separation tank 4. Herein, a pump is equipped with the oil supply pipe P1 and the circulation pipe P2.

For example, in a case when oil is detected by the upper tank second oil detection sensor OS1a, this oil-collecting system S comprises a flow path switching part 41 that switches the route to the collecting tank T from the oil/water separation tank 4. Specifically, a three-way valve is provided as the flow path switching section 41, and the inflow path from the oil/water separator 4 to the collecting tanks T1, T2 is branched into two. The controller 31a sends a control signal to the three-way valve according to the detection value of the upper tank second oil detection sensor OS1a and automatically switches the valve direction. Due to this, the control unit 31a switches the path of the floating oil to the collecting tank T1 or the collecting tank T2. As a result of this, multiple collecting tanks T can be installed depending on the scale, and even when one collecting tank T is working on recycling oil and sludge, floating oil from the oil/water separation tank 4 can be continuously transferred to another collecting tank T.

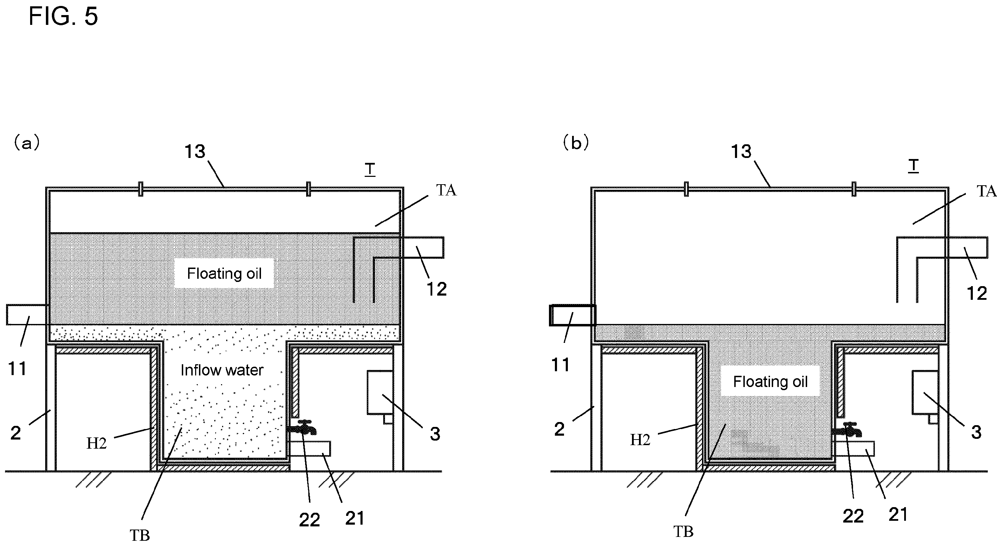

Next, the transition state of the amount stored in the collecting tank T according to this embodiment will be described with reference to FIGS. 5 to 7. First, in a case when the flow of floating oil from the oil/water separation tank 4 into the collecting tank T1 is completed, the controller 31a switches the flow path from the oil/water separation tank 4, from the collecting tank T1 to T2 by the flow path switching part 41. It is noted that this flow path switching does not necessarily need to be performed automatically, and may be performed manually. In this case, since the inflow from the oil/water separation tank 4 via the inflow pipe is heated and kept at 50 degrees, as shown in FIG. 5(a), floating oil and water are separated in the collecting tank T in order starting from the upper layer with the lighter specific gravity. Herein, the inflow may be heated to about 50 degrees using the upper tank heating section H1.

Then, as shown in FIG. 5(a), when the inflow of a predetermined amount of floating oil is completed, the controller 31a turns off the upper tank heating section H1. And then the controller 31a controls the inflow valve 11 and the discharge valve 12 of the upper tank TA to be closed, and the second discharge valve 21 to be opened. Then, the inflow water in the collecting tank T is circulated and returned to the oil/water separation tank 4 via the circulation pipe P3→P2. When the inflow water is taken out, the collecting tank T is filled with floating oil, as shown in FIG. 5(b).

As a result of this, the floating oil starts to fall. When the floating oil falls to the bottom side of the lower tank TB, the oil is detected by the lower tank oil sensor OS2. Then, the controller 31a performs control to automatically close the second discharge valve 21 as described above.

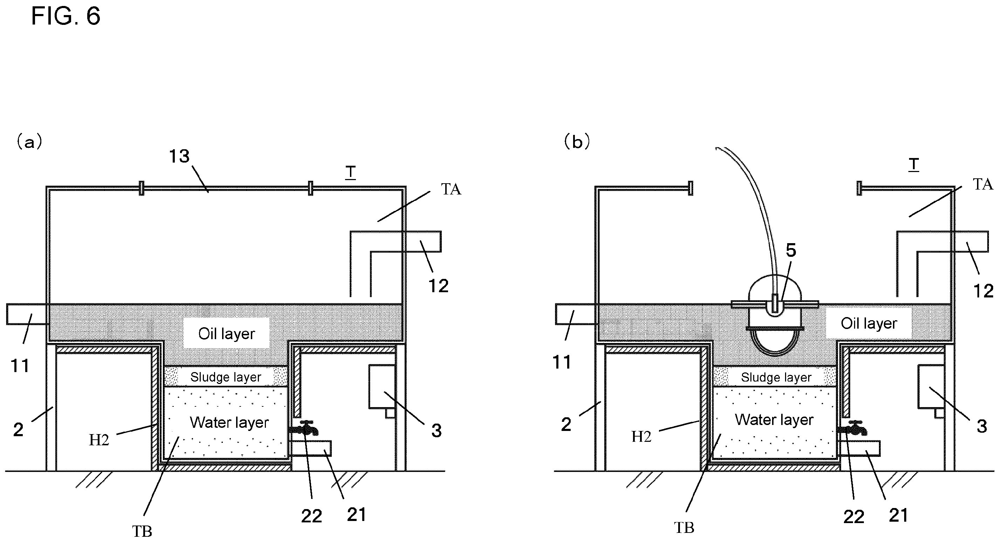

Next, when the lower tank oil sensor OS2 detects that the floating oil has fallen to the bottom of the lower tank TB, the controller 31a closes the second discharge valve 21. And the controller 31a starts to heat the floating oil stored in the lower tank TB to about 70 degrees using the lower tank heating section H2. As a result, as shown in FIG. 6(a), the layer is separated into an oil layer, a sludge layer, and a water layer from the top according to its specific gravity. Herein, if oil is detected by the upper tank oil detection sensor OS1, it is estimated that the amount of floating oil stored in the collecting tank T is higher than or equal to the lower tank TB and the bottom of the upper tank. Therefore, the upper tank bottom heating section H1' may also be turned on. Furthermore, the amount of stored water may be adjusted using the manual valve 22 of the lower tank TB.

Next, when the lower tank temperature sensor TS2 detects 65 to 70 degrees, the lower tank heating section H2 is turned off. Then, as shown in FIG. 6(b), the lid portion 13 of the upper tank TA is opened and the refining transfer device 5, which efficiently collects only the oil layer in the collecting tank T, is inserted.

This refining transfer device 5 is, for example, a waste solid content, waste oil contaminant, and waste water layer separator shown in Japanese Patent No. 5452814. This refining transfer device 5 further selectively separates and removes waste solids, waste oil impurities, waste water, etc. contained in the waste oil, and transports only the waste oil, which can be used as a petroleum alternative fuel, into another transport and storage containers. The specific separation method involves keeping the lower tank TB at approximately 70°C, completely dissolving the lard in the lower tank TB, separating it into an oil layer, a sludge layer, and a wastewater layer. After these, the refining transfer device 5 is dropped into it. Since the refining transfer device 5 has a floating plate, when the waste oil transfer motor is turned on, the motor is driven while the device 5 is floating. The waste solid content, waste oil impurities, and oil content between the waste water layer separator and the floating plate pass from the suction port to the waste oil suction pipe, while the waste solid content such as garbage and suspended matter in the sludge layer is removed by the waste solid content remover. And then they flow into the storage container from the waste oil discharge pipe and are collected.

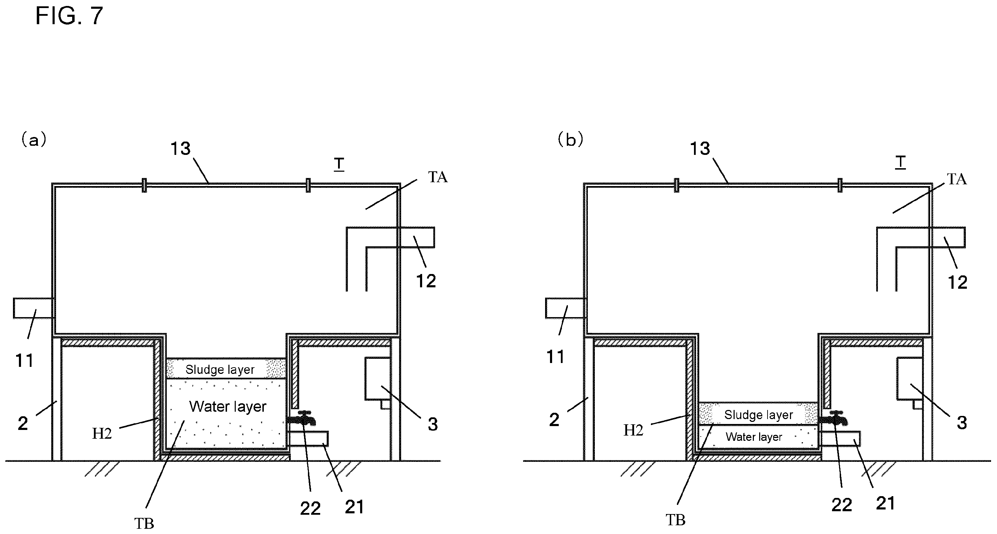

When the floating oil is collected using the refining transfer device 5, as shown in FIG. 7(a), water is discharged from the lower tank TB using the manual valve 22 or the second discharge valve 21. In the end, sludge as shown in FIG. 7(b) is stored on the bottom side of the lower tank TB, and this sludge is manually collected using the manual valve 22.

Herein, the collected sludge is basically used for biogasification (methane power generation, clean hydrogen). The first step in turning this unused sludge into a resource is to turn it into biogas (methane power generation, green hydrogen) at a biogas plant that performs methane fermentation. In particular, in terms of methane power generation, biogas as per ton of raw material produced from business food waste (including residual sludge) is 5 to 10 times bigger than the biogas produced from livestock manure and sewage sludge, which used to be the main raw materials for conventional methane gas production. Therefore, methane power generation based on methane treatment of food residue or mixing with livestock manure etc, is recommended.

With these procedures, oil, sludge, and water in the collecting tank T are separated, and a series of collecting operations are completed, and the inflow valve 11 is opened again. As a result, the floating oil flows from the oil/water separation tank 4 into the collecting tank T, and the same steps will be conducted again. And the efficiently separated and collected oil and sludge are recycled into resources.

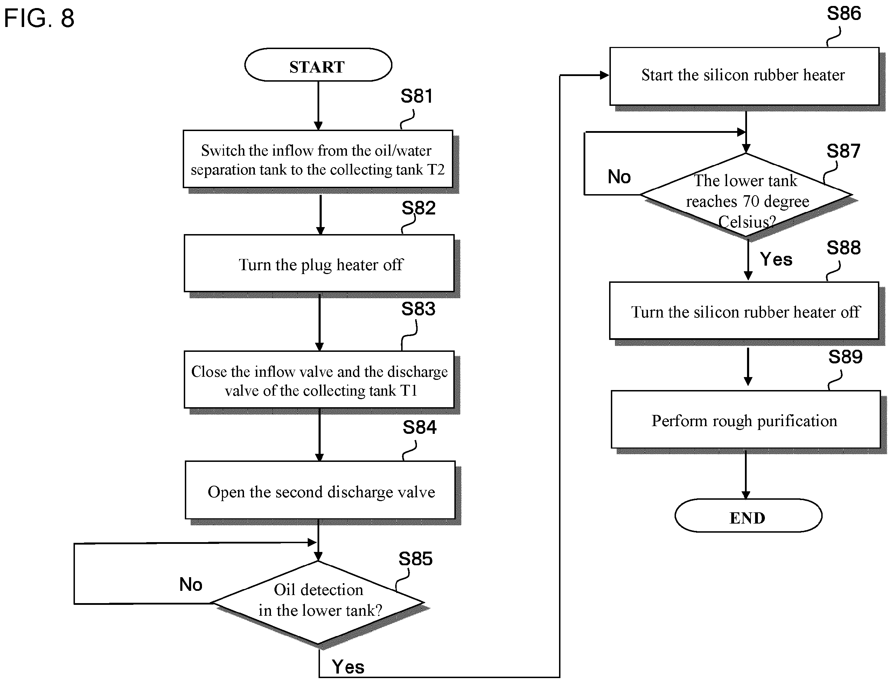

Next, the operating procedure of the oil-collecting system according to this embodiment will be explained with reference to the flowchart shown in FIG. 8. First, when oil is detected by the upper tank second oil detection sensor OS1a of the collecting tank T1, the controller 31a uses the flow path switching part 41 to switch the inflow from the oil/water separation tank 4 to the collecting tank T2 (S81).

Next, the controller 31a of the collecting tank T1 performs control to turn off the upper tank heating section H1 (plug heater) (S82) and close the inflow valve 11 and discharge valve 12 of the collecting tank T1 (S83). Then, the controller 31a of the collecting tank T1 performs control to open the second discharge valve 21 (S84), and the floating oil starts to fall and is stored by this water discharging process.

Then, the controller 31a detects whether or not there is an oil detection reaction by the lower tank oil detection sensor OS2 (S85), and if oil is detected (Yes in S85), the controller 31a performs control to close the second discharge valve 21. Herein, the amount of water stored in the collecting tank T may be adjusted using a manual valve.

Then, the controller 31a of the collecting tank T1 controls the lower tank heating section (silicon rubber heater (H2)) to work (S86). Herein, if the storage amount is greater than or equal to the plug heater H1 based on the detection signal from the upper tank oil detection sensor OS1, the plug heater H1 is also turned on.

Next, the controller 31a detects whether the liquid temperature is 70°C using the lower tank oil detection sensor TS2. If it reaches 70°C or higher (Yes in S87), the controller 31a turns off the silicon rubber heater H2 (S88). In the end, as described above, the refining transfer device 5 is put into the collecting tank T1 and performs rough purification such as extraction and collecting of oil and sludge (S89). Finally, a series of operations in the collecting tank T1 has been completed.

As mentioned above, this invention comprises an oil and sludge collecting tank T that temporarily stores an upper layer of an oil/water separation tank, and that collects oil and sludge, comprising: an upper tank TA into which the upper layer of the oil/water separation tank flows through an inflow pipe; at least one or more lower tank TB that has a smaller volume than the upper tank TA, and that is continuously provided from the bottom surface of the upper tank TA; and a lower tank heating section H2 that heats the lower tank TB. With this configuration, oil and sludge from the oil/water separation tank that is placed on-site at a food factory or the like that discharges oil-containing wastewater, and that pools oil-containing wastewater can be more efficiently extracted, recovered, and recycled.

Furthermore, like the conventional tank, the collecting tank T according to the present embodiment has a function of consolidating the floating oil, which is pumped up from the oil/water separation tank 4 and the like (50° C heat retention). In addition, the floating oil, which is collected in the collecting tank T, is dropped into the lower tank TB provided below the recovery tank T, and the lower tank TB is heated with a silicone rubber heater H2, etc. As a result, the temperature can be kept at 65-70° C. After separating oil, sludge, and water, the oil can be collected while being cleaned.

Further, the sludge can be extracted and collected efficiently from the floating oil through the manual valve 22 provided in the lower tank TB. Furthermore, the inflow water that has flowed into the collecting tank T can be directly returned to the oil/water separation tank 4 via the return pipes P2 and P3. Additionally, in recent years, unlike restaurants, some food factories are generating several tons of floating oil and fat every day. Therefore, it is possible to provide an on-site resource recycling service by installing on-site equipment, such as the collecting tank T of the present invention within the factory premises. In other words, the collecting tank T according to the present invention can be utilized for realizing a decarbonized society.

It is noted that the present invention is not limited to the above-described embodiments and modified examples, and various modifications are possible within the scope of the claims. For example, even in a configuration in which the lower tanks TB are formed at two locations (two or more locations) for one oil and sludge collecting tank, the same effects as in the above embodiment can be achieved.

### Reference Signs List

T: oil and sludge collecting tank
TA: upper tank
TR: lower tank
H1: upper tank heating section (plug heater)
H1': upper tank bottom heating section (silicon rubber heater)
OS1: upper tank oil detection sensor
OS1a: upper tank second oil detection sensor
TS1: upper tank temperature sensor
H2: lower tank heating section (silicon rubber heater)
OS2: lower tank oil detection sensor
TS2: lower tank temperature sensor
2a: SUS (stainless steel) waterproof cover
2b: heat insulating material
11: inflow valve
12: discharge valve
13: lid portion
21: second discharge valve
22: manual valve
31a: controller
41: flow path switching part

## Claims

1. An oil and sludge collecting tank (T) that is configured to temporarily store an upper layer of an oil/water separation tank that temporarily stores oil-containing wastewater, and that is configured to collect oil and sludge from said oil-containing wastewater, comprising:
an upper tank (TA) into which the upper layer of the oil/water separation tank flows through an inflow pipe (P1);
at least one or more lower tank (TB) that has a smaller volume than the upper tank (TA), wherein an opening is provided at the bottom surface of the upper tank (TA), said opening corresponds to the upper surface of the lower tank (TB) such that the stored content of the upper tank (TA) directly flows into the lower tank (TB); and
a lower tank heating means (H2) that is configured to heat the lower tank (TB),
wherein the lower tank (TB) comprising:
a second discharge valve (21) that is configured to control the amount of discharge to a return pipe (P2), which is configured to return the stored water in the bottom side of the lower tank (TB) to the oil/water separation tank;
a manual valve (22) for discharging the stored water in the bottom side of the lower tank (TB); and
a lower tank temperature sensor (TS2) that is configured to detect temperature changes in the lower tank (TB),
**characterized in that** the lower tank (TB) further comprises
a lower tank oil detection sensor (OS2) that is configured to detect an oil in the bottom side of the lower tank (TB).

2. The oil and sludge collecting tank (T) according to claim 1, wherein the upper tank (TA) comprising:
an inflow valve (11) that is configured to control an inflow amount of the upper layer pumped via the inflow pipe (P1);
a discharge valve (12) that is configured to control a discharge amount discharged to a return pipe (P2), which is configured to return a stored water of the upper tank (TA) to the oil/water separation tank,
wherein a lid portion (13), into which a refining transfer device (5) for suctioning and collecting the oil in the oil and sludge collecting tank (T) can be inserted, is formed on an upper surface of the upper tank (TA).

3. The oil and sludge collecting tank (T) according to claim 1 or 2,
wherein the lower tank heating means (H2), which is provided on a wall of the lower tank (TB) whose shape is cubic, is a silicon rubber heater (H2) in the form of a flat surface, and
wherein a surface side of the silicon rubber heater (H2) is covered with a heat insulating material (2b).

4. The oil and sludge collecting tank (T) according to claim 1, further comprising:
a controller (31a) that is configured to close the second discharge valve (21) and start the lower tank heating means (H2) in a case when oil in the bottom side of the lower tank (TB) is detected by the lower tank oil detection sensor (OS2) and stop the lower tank heating means (H2) in a case when the temperature detected by the lower tank temperature sensor (TS2) reaches a predetermined temperature thereafter.

5. The oil and sludge collecting tank (T) according to claim 4, further comprising:
an upper tank heating means (H1) that is configured to heat the upper tank (TA);
an upper tank temperature sensor (TS1) that is configured to detect the temperature in the upper tank (TA);
an upper tank oil detection sensor (OS1) that is configured to detect oil in the bottom side of the upper tank (TA);
an upper tank second oil detection sensor (OS1a) that is configured to detect oil at a predetermined height from the bottom of the upper tank (TA); and
an upper tank bottom heating section (H1') that is configured to heat the bottom of the upper tank (TA),
wherein the controller (31a) is configured to start the upper tank bottom heating section (H1') in both cases when the lower tank oil detection sensor (OS2) detects oil in the bottom side of the lower tank (TB) and when the upper tank oil detection sensor (OS1) detects oil in the bottom side of the upper tank (TA).

6. The oil and sludge collecting tank (T) according to claim 1, wherein the capacity ratio of the upper tank (TA) and the lower tank (TB) is in the range of 3:1 to 4:1.

## Patentansprüche

1. - Öl- und Schlammsammeltank (T), der konfiguriert ist, um eine obere Schicht eines Öl/Wasser-Abscheidetanks, der ölhaltiges Abwasser vorübergehend speichert, vorübergehend zu speichern, und der konfiguriert ist, um Öl und Schlamm aus dem ölhaltigen Abwasser zu sammeln, umfassend:
einen oberen Tank (TA), in den die obere Schicht des Öl/Wasser-Abscheidetanks durch ein Zulaufrohr (P1) fließt;
mindestens einen oder mehrere untere Tanks (TB), die ein kleineres Volumen als der obere Tank (TA) aufweisen, wobei an der Bodenfläche des oberen Tanks (TA) eine Öffnung bereitgestellt ist, wobei die Öffnung der oberen Fläche des unteren Tanks (TB) entspricht, sodass der gespeicherte Inhalt des oberen Tanks (TA) direkt in den unteren Tank (TB) fließt; und
eine Heizeinrichtung für unteren Tank (H2), die konfiguriert ist, um den unteren Tank (TB) zu heizen,
wobei der untere Tank (TB) Folgendes umfasst:
ein zweites Ablassventil (21), das konfiguriert ist, um die Ablassmenge zu einem Rücklaufrohr (P2) zu steuern, das konfiguriert ist, um das an der Bodenseite des unteren Tanks (TB) gespeicherte Wasser zu dem Öl/Wasser-Abscheidetank zurückzuleiten;
ein manuelles Ventil (22) zum Ablassen des an der Bodenseite des unteren Tanks (TB) gespeicherten Wassers; und
einen Temperatursensor für unteren Tank (TS2), der konfiguriert ist, um Temperaturänderungen in dem unteren Tank (TB) zu erfassen,
**dadurch gekennzeichnet, dass** der untere Tank (TB) ferner einen Ölerfassungssensor für unteren Tank (OS2) umfasst, der konfiguriert ist, um Öl an der Bodenseite des unteren Tanks (TB) zu erfassen.

2. - Öl- und Schlammsammeltank (T) nach Anspruch 1, wobei der obere Tank (TA) Folgendes umfasst:
ein Zulaufventil (11), das konfiguriert ist, um eine Zulaufmenge der über das Zulaufrohr (P1) gepumpten oberen Schicht zu steuern;
ein Ablassventil (12), das konfiguriert ist, um eine Ablassmenge zu steuern, die an ein Rücklaufrohr (P2) abgegeben wird, das konfiguriert ist, um gespeichertes Wasser des oberen Tanks (TA) zu dem Öl/Wasser-Abscheidetank zurückzuleiten,
wobei an einer oberen Fläche des oberen Tanks (TA) ein Deckelabschnitt (13) gebildet ist, in das eine raffinierende Überführungsvorrichtung (5) zum Ansaugen und Sammeln des Öls in dem Öl- und Schlammsammeltank (T) eingeführt werden kann.

3. - Öl- und Schlammsammeltank (T) nach Anspruch 1 oder 2,
wobei die Heizeinrichtung für unteren Tank (H2), die an einer Wand des unteren Tanks (TB) bereitgestellt ist, dessen Form würfelförmig ist, eine Silikonkautschuk-Heizung (H2) in Form einer flachen Fläche ist, und
wobei eine Flächenseite der Silikonkautschuk-Heizung (H2) mit einem Wärmeisoliermaterial (2b) bedeckt ist.

4. - Öl- und Schlammsammeltank (T) nach Anspruch 1, ferner umfassend:
eine Steuerung (31a), die konfiguriert ist, um das zweite Ablassventil (21) zu schließen und die Heizeinrichtung für unteren Tank (H2) in einem Fall zu starten, in dem durch den Ölerfassungssensor für unteren Tank (OS2) Öl an der Bodenseite des unteren Tanks (TB) erfasst wird, und die Heizeinrichtung für unteren Tank (H2) in einem Fall abzuschalten, in dem die durch den Temperatursensor für unteren Tank (TS2) erfasste Temperatur danach eine vorbestimmte Temperatur erreicht.

5. - Öl- und Schlammsammeltank (T) nach Anspruch 4, ferner umfassend:
eine Heizeinrichtung für oberen Tank (H1), die konfiguriert ist, um den oberen Tank (TA) zu heizen;
einen Temperatursensor für oberen Tank (TS1), der konfiguriert ist, um die Temperatur in dem oberen Tank (TA) zu erfassen;
einen Ölerfassungssensor für oberen Tank (OS1), der konfiguriert ist, um Öl an der Bodenseite des oberen Tanks (TA) zu erfassen;
einen zweiten Ölerfassungssensor für oberen Tank (OS1a), der konfiguriert ist, um Öl auf einer vorbestimmten Höhe von dem Boden des oberen Tanks (TA) zu erfassen; und
einen Bodenheizabschnitt für oberen Tank (H1'), der konfiguriert ist, um den Boden des oberen Tanks (TA) zu heizen,
wobei die Steuerung (31a) konfiguriert ist, um den Bodenheizabschnitt für oberen Tank (H1') in beiden Fällen zu starten, wenn der Ölerfassungssensor für unteren Tank (OS2) Öl an der Bodenseite des unteren Tanks (TB) erfasst und wenn der Ölerfassungssensor für oberen Tank (OS1) Öl an der Bodenseite des oberen Tanks (TA) erfasst.

6. - Öl- und Schlammsammeltank (T) nach Anspruch 1, wobei das Kapazitätsverhältnis des oberen Tanks (TA) und des unteren Tanks (TB) in dem Bereich von 3:1 bis 4:1 ist.

## Revendications

1. - Réservoir de collecte d'huile et de boue (T) qui est configuré pour stocker temporairement une couche supérieure d'un réservoir de séparation huile/eau qui stocke temporairement des eaux usées contenant de l'huile, et qui est configuré pour collecter de l'huile et de la boue provenant desdites eaux usées contenant de l'huile, comprenant :
un réservoir supérieur (TA) dans lequel la couche supérieure du réservoir de séparation huile/eau s'écoule à travers un tuyau d'entrée (P1) ;
au moins un ou plusieurs réservoirs inférieurs (TB) qui a ou ont un volume inférieur à celui du réservoir supérieur (TA), une ouverture étant disposée à la surface inférieure du réservoir supérieur (TA), ladite ouverture correspondant à la surface supérieure du réservoir inférieur (TB) de telle sorte que le contenu stocké du réservoir supérieur (TA) s'écoule directement dans le réservoir inférieur (TB) ; et
un moyen de chauffage de réservoir inférieur (H2) qui est configuré pour chauffer le réservoir inférieur (TB),
le réservoir inférieur (TB) comprenant :
une seconde soupape de décharge (21) qui est configurée pour commander la quantité de décharge à un tuyau de retour (P2), lequel est configuré pour renvoyer dans le réservoir de séparation huile/eau l'eau stockée dans la partie inférieure du réservoir inférieur (TB);
une soupape manuelle (22) pour décharger l'eau stockée dans la partie inférieure du réservoir inférieur (TB) ; et
un capteur de température de réservoir inférieur (TS2) qui est configuré pour détecter des variations de température dans le réservoir inférieur (TB),
**caractérisé par le fait que** le réservoir inférieur (TB) comprend en outre un capteur de détection d'huile de réservoir inférieur (OS2) qui est configuré pour détecter une huile dans la partie inférieure du réservoir inférieur (TB).

2. - Réservoir de collecte d'huile et de boue (T) selon la revendication 1, dans lequel le réservoir supérieur (TA) comprend :
une soupape d'entrée (11) qui est configurée pour commander une quantité d'entrée de la couche supérieure pompée par l'intermédiaire du tuyau d'entrée (P1) ;
une soupape de décharge (12) qui est configurée pour commander une quantité de décharge déchargée dans un tuyau de retour (P2), lequel est configuré pour renvoyer une eau stockée du réservoir supérieur (TA) dans le réservoir de séparation huile/eau,
dans lequel une partie couvercle (13), dans laquelle un dispositif de transfert de raffinage (5) destiné à aspirer et à collecter l'huile dans le réservoir d'huile et de boue (T) peut être introduit, est formée sur une surface supérieure du réservoir supérieur (TA).

3. - Réservoir de collecte d'huile et de boue (T) selon la revendication 1 ou 2,
dans lequel le moyen de chauffage de réservoir inférieur (H2), qui est disposé sur une paroi du réservoir inférieur (TB) dont la forme est cubique, est un élément chauffant en caoutchouc de silicone (H2) sous la forme d'une surface plate, et
dans lequel un côté de surface de l'élément chauffant en caoutchouc de silicone (H2) est recouvert d'un matériau isolant thermique (2b).

4. - Réservoir de collecte d'huile et de boue (T) selon la revendication 1, comprenant en outre :
un dispositif de commande (31a) qui est configuré pour fermer la seconde soupape de décharge (21) et démarrer le moyen de chauffage de réservoir inférieur (H2) dans un cas où l'huile dans le côté fond du réservoir inférieur (TB) est détectée par le capteur de détection d'huile de réservoir inférieur (OS2) et pour arrêter le moyen de chauffage de réservoir inférieur (H2) dans un cas où la température détectée par le capteur de température de réservoir inférieur (TS2) atteint une température prédéterminée par la suite.

5. - Réservoir de collecte d'huile et de boue (T) selon la revendication 4, comprenant en outre :
un moyen de chauffage de réservoir supérieur (H1) qui est configuré pour chauffer le réservoir supérieur (TA) ;
un capteur de température de réservoir supérieur (TS1) qui est configuré pour détecter la température dans le réservoir supérieur (TA) ;
un capteur de détection d'huile de réservoir supérieur (OS1) qui est configuré pour détecter de l'huile dans le côté fond du réservoir supérieur (TA) ;
un second capteur de détection d'huile de réservoir supérieur (OS1a) qui est configuré pour détecter de l'huile à une hauteur prédéterminée par rapport au fond du réservoir supérieur (TA) ; et
une section de chauffage de fond de réservoir supérieur (H1') qui est configurée pour chauffer le fond de réservoir supérieur (TA),
dans lequel le dispositif de commande (31a) est configuré pour démarrer la section de chauffage de fond de réservoir supérieur (H1') à la fois lorsque le capteur de détection d'huile de réservoir inférieur (OS2) détecte de l'huile dans le côté fond du réservoir inférieur (TB) et lorsque le capteur de détection d'huile de réservoir supérieur (OS1) détecte de l'huile dans le côté fond du réservoir supérieur (TA).

6. - Réservoir de collecte d'huile et de boue (T) selon la revendication 1, dans lequel le rapport de capacité entre le réservoir supérieur (TA) et le réservoir inférieur (TB) se situe dans la plage de 3:1 à 4:1.
